# EUROPEAN PATENT SPECIFICATION

(11) **EP 0 666 889 B1**
(45) Date of publication and mention of the grant of the patent: **16.09.1998**
(21) Application number: 94901390.8
(22) Date of filing: 29.10.1993
(51) Int. Cl.: C09J 7/02

(54) **ADHESIVE TAPE FOR PROTECTING OF RUBBER SEALING GASKETS**
KLEBEBAND ZUM SCHUTZ VON GUMMIDICHTUNGEN
RUBAN ADHESIF UTILISE POUR PROTEGER DES JOINTS D'ETANCHEITE EN CAOUTCHOUC

(30) Priority: 02.11.1992 DE 4236948
(43) Date of publication of application: 16.08.1995
(73) Proprietor: MINNESOTA MINING AND MANUFACTURING COMPANY, St. Paul, Minnesota 55133-3427 (US)
(72) Inventor: HOFFMANN, Hans-Gunter, D-57339 Erndtebruck (DE)
(74) Representative: VOSSIUS & PARTNER
(86) International application number: US9310862
(87) International publication number: WO9410255

(56) References cited:
- DE-U- 9 106 206
- DATABASE WPI Section Ch, Week 8836, Derwent Publications Ltd., London, GB; Class G03, AN 88-253571 'Tape for attaching sheet to non-painted portion' & JP,A,63 183 978 (TOMAE M) 29 July 1988

## Description

The invention concerns a process as well as a protective adhesive tape for covering and taping of flexible rubber sealing gaskets such as those used to mount vehicle windshields during repainting of vehicle bodies.

### Background

For vehicles, where there is no hollow space between the rubber sealing gasket and the body, there is the possibility to introduce a cord under the lip of the rubber gasket which seals to the body. This way the lip is spaced away from the body, and it becomes possible to exactly cover this lip, so that the body can be repainted cleanly in the region of the lip seal.

But for vehicles, where there is a hollow space between the rubber sealing gasket and the body, it is not practical to use the cord, since it easily can slide into the hollow space. If this happens during painting, and the lip at that location contacts the vehicle body, it becomes impossible to paint cleanly.

It is also possible to insert the lip of the gasket into the hollow space between the rubber sealing gasket and the car body. But it is not very feasible to tape the rubber sealing gasket in the region of the inserted lip. In addition it becomes rather difficult to pull out the inserted lip after finished painting. To accomplish this, one needs a thin pointed tool, which in some instances can even damage the rubber sealing gasket. Also this operation is very time consuming.

The object of this invention, is to develop a process as well as a pressure sensitive protective tape, which makes it possible to keep the rubber sealing gasket and its lip away from the car body during repainting, where the rubber sealing gasket is simultaneously covered and where little time is used for applying and removing the tape to directly recondition the lip to its original condition.

### Summary of the Present Invention

This task is, according to the invention, accomplished by a protective adhesive tape for masking flexible sealing gaskets of the type having a leg portion that overlies an adjacent body panel, said protective adhesive tape comprising along its total width at least on the side which is laid open during application a slightly textured smooth surface structure and on the opposite side a pressure sensitive adhesive edge layer and a non-adhesive edge portion for insertion under the leg portion of the sealing gasket.

In accordance with another aspect of the present invention, a process for masking flexible sealing gaskets of the type having a leg portion that overlies an adjacent body panel is described. The process comprising the steps of: providing a protective adhesive tape having on one major surface thereof a pressure sensitive adhesive edge layer and a non-adhesive edge portion; inserting the non-adhesive edge portion of the protective adhesive tape between the lip of the flexible rubber sealing gasket and the body panel, then folding the protective adhesive tape with the lip away from the body panel, and adhering the adhesive edge layer to a further body panel located on the other side of the sealing gasket from the leg portion.

By the special design of the protective adhesive tape, it is possible to make covering of vehicle windshields very simple. The pressure sensitive adhesive layer positioned along the protective tape makes it possible to fasten it along the windshield without the need for a second adhesive tape. After repainting, the protective tape with its pressure sensitive edge is removed by simply pulling it off the windshield, whereby the protective tape is simply pulled out of the hollow space between the car body and the rubber sealing gasket. This way the lip of the rubber sealing gasket will again contact the body of the vehicle.

### Brief Description of the Drawings

One example of the invention is shown in the drawings wherein:

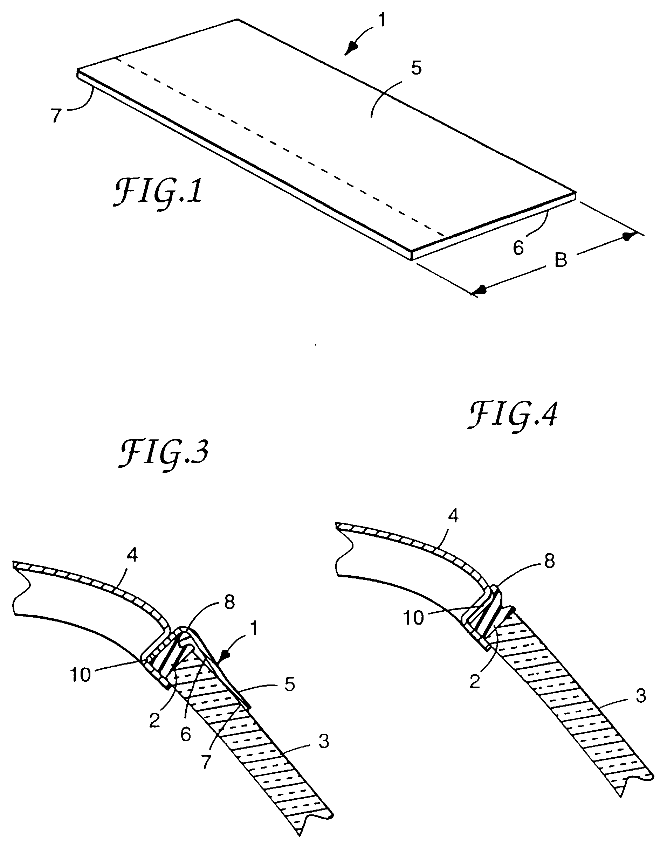

Figure 1 shows a part of the protective tape in perspective;

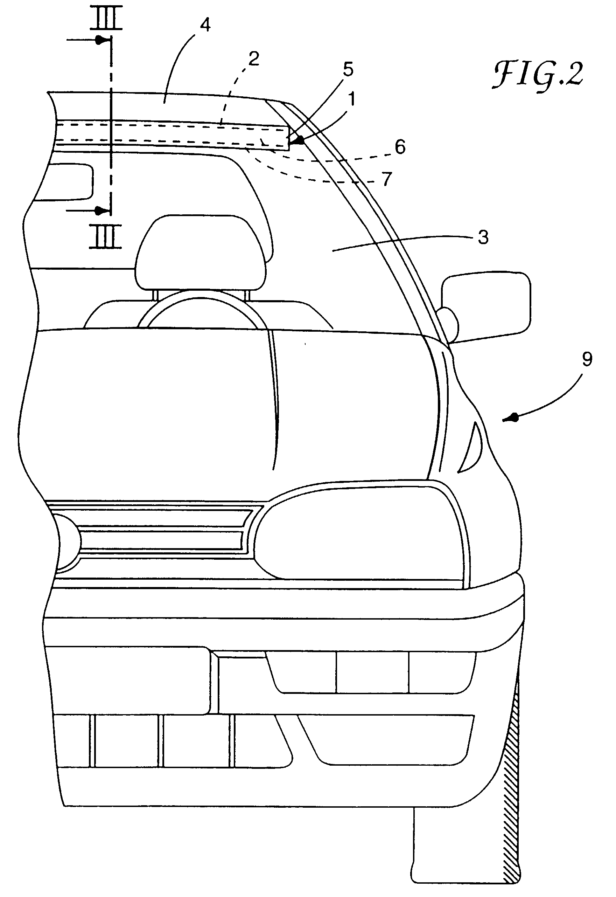

Figure 2 shows a part of the vehicle with the protective tape mounted;
Figure 3 is a cross-section along line III-III in Figure 2; and
Figure 4 is a cross-section according to line III-III in Figure 2 with the lip of the rubber sealing gasket contacting the vehicle body after removal of the protective tape.

### Detailed Description

In accordance with the present invention, a protective adhesive tape 1 is provided for covering and taping of flexible rubber sealing gaskets 2 that are used between adjacent vehicle body panels of metal, glass, etc., such as those used to mount vehicle windshield, during repainting of vehicle bodies 4. The tape 1 has along its total width B, on at least the one major surface 5 that is laid free during application, a slightly textured, but in itself smooth surface structure. On the opposite major surface 6, to this slightly textured smooth surface, a pressure sensitive adhesive edge strip 7 is present. The pressure sensitive adhesive edge strip need not be provided on the tape edge, as long as a non-adhesive edge portion is also provided at another tape side edge.

The protective adhesive tape 1 is preferably about 0.5 mm thick, to provide sufficient strength so that a lip 8 of the rubber sealing gasket 2 can not push the protective adhesive tape away.

The slightly textured smooth surface structure of the free side 5 of the protective adhesive tape 1 is in a preferred form coated with silicones, so that for one, the paint does not stick to the protective adhesive tape 1 during repainting, so that the new paint coating is not damaged during removal of the tape from the body 4, and further so that, when the protective adhesive tape 1 is supplied in rolls, the adhesively coated edge strip 7 releases from the slightly textured, smooth surface of the free side 5.

For tailored application of the protective adhesive tape 1 to a windshield 3 of a specific type vehicle, it is preferable to provide a removable protective layer (not shown) covering the pressure sensitive adhesive edge strip 7.

The adhesive layer of the pressure sensitive edge strip 7 is designed to be heat stable, so that substantially no residues are left on the windshield 3 after treatment of the vehicle 9 in a drying chamber. Such would be time consuming and difficult to remove. On the other hand the adhesive layer maintains its adhesion during the heat exposure of the drying chamber, so that the protective adhesive tape does not just flex back upon the freshly painted vehicle body.

After this description of the design of the protective adhesive tape 1, the application of same is now described.

The non-adhesive edge of the protective adhesive tape 1 is inserted between the lip 8 of the flexible sealing gasket 2 and the body panel 4 and preferably into the hollow space 10 that is formed by the lip 8 of the rubber sealing gasket 2 which extends away from the windshield 3 and a flange portion of the vehicle body 4. Then, the protective adhesive tape 1 is folded along the gasket lip 8 towards the windshield 3 and adhered to the windshield 3 by way of its pressure sensitive edge strip 7. The protective adhesive tape 1 holds the gasket lip 8 away from the vehicle body 4, as shown in Figure 3.

After repainting and the following treatment in the drying chamber, the adhesive edge strip 7 is pulled from the windshield 3, and the protective adhesive tape 1 is pulled out of the hollow space 10. This way the lip 8 of the rubber sealing gasket 2 will again seal against the body 4 of the vehicle 9.

## Claims

1. A process for masking flexible sealing gaskets of the type having a leg portion that overlies an adjacent body panel said process comprising the steps of: providing a protective adhesive tape having on one major surface thereof a pressure sensitive adhesive edge layer and a non-adhesive edge portion; inserting the non-adhesive edge portion of the protective adhesive tape between a lip of the leg portion of the flexible sealing gasket and the body panel, then folding the protective adhesive tape with the lip away from the body panel, and adhering the adhesive edge layer to a further body panel located on the other side of the sealing gasket from the leg portion.

2. A protective adhesive tape for masking flexible sealing gaskets of the type having a leg portion that overlies an adjacent body panel, said protective adhesive tape (1) comprising along its total width (B) at least on the side which is laid open during application (5) a slightly textured smooth surface structure and on the opposite side (6) a pressure sensitive adhesive edge layer (7) and a non-adhesive edge portion for insertion under the leg portion of the sealing gasket.

3. A protective adhesive tape according to claim 2, characterized in that the slightly textured smooth surface structure on the side that is laid open (5) is coated with silicone.

4. A protective adhesive tape according to claim 2 and 3, characterized in that the protective adhesive tape (1) has a thickness of 0.5 mm.

5. A protective adhesive tape according to claim 2 to 4, characterized in that the protective adhesive tape is in form of a roll.

6. A protective adhesive tape according to claim 2 to 4, characterized in that the protective adhesive tape is shape fitted to be applied to the specific windshield of a vehicle type.

7. A protective adhesive tape according to claim 2, characterized in that the pressure sensitive adhesive edge layer (7) is applied with a pull-off protective layer.

8. A protective adhesive tape according to claim 2, characterized in that the adhesive layer of the pressure sensitive adhesive edge layer (7) is heat resistant.

## Patentansprüche

1. Verfahren zum Maskieren flexibler Dichtungen des Typs mit einem Beinabschnitt, der über einer angrenzenden Körperplatte liegt, wobei das Verfahren folgende Schritte aufweist: Bereitstellen eines schützenden Klebebands mit einer druckempfindlichen klebenden Kantenschicht und einem nichtklebenden Kantenabschnitt an dessen einer Hauptfläche; Einführen des nichtklebenden Kantenabschnitts des schützenden Klebebands zwischen eine Lippe des Beinabschnitts der flexiblen Dichtung und die Körperplatte, dann Falten des schützenden Klebebands von der Körperplatte weg, und Kleben der klebenden Kantenschicht an eine weitere Körperplatte, die sich an der zum Beinabschnitt anderen Seite der Dichtung befindet.

2. Schützendes Klebeband zum Maskieren von flexiblen Dichtungen des Typs mit einem Beinabschnitt, der über einer angrenzenden Körperplatte liegt, wobei das schützende Klebeband (1) über seiner gesamten Breite (B) mindestens an der Seite (5), die während der Anwendung offen liegt, eine leicht strukturierte glatte Oberflächenstruktur aufweist und an der gegenüberliegenden Seite (6) eine druckempfindliche klebende Kantenschicht (7) und einen nichtklebenden Kantenabschnitt zum Einführen unter den Beinabschnitt der Dichtung hat.

3. Schützendes Klebeband nach Anspruch 2, dadurch gekennzeichnet, daß die leicht strukturierte glatte Oberflächenstruktur an der offen liegenden Seite (5) mit Silikon beschichtet ist.

4. Schützendes Klebeband nach Anspruch 2 und 3, dadurch gekennzeichnet, daß das schützende Klebeband (1) eine Dicke von 0,5 mm hat.

5. Schützendes Klebeband nach Anspruch 2 bis 4, dadurch gekennzeichnet, daß das schützende Klebeband die Form einer Rolle hat.

6. Schützendes Klebeband nach Anspruch 2 bis 4, dadurch gekennzeichnet, daß das schützende Klebeband in seiner Form angepaßt ist, um an der speziellen Windschutzscheibe eines Fahrzeugtyps angewendet zu werden.

7. Schützendes Klebeband nach Anspruch 2, dadurch gekennzeichnet, daß die druckempfindliche klebende Kantenschicht (7) mit einer schützenden Abziehschicht versehen ist.

8. Schützendes Klebeband nach Anspruch 2, dadurch gekennzeichnet, daß die klebende Schicht der druckempfindlichen klebenden Kantenschicht (7) hitzeresistent ist.

## Revendications

1. Un procédé de masquage de joints d'étanchéité flexibles du type ayant une portion de bordure qui recouvre un panneau de carrosserie adjacent, ledit procédé comprenant les étapes consistant : à fournir un ruban adhésif protecteur présentant, sur une surface principale de celui-ci, une couche de bord adhésive sensible à la pression et une portion de bord non adhésive ; à insérer la portion de bord non adhésive du ruban adhésif protecteur entre une lèvre de la portion de bordure du joint d'étanchéité flexible et le panneau de carrosserie, puis à plier le ruban adhésif protecteur, la lèvre étant écartée du panneau de carrosserie, et à coller la couche de bord adhésive sur un autre panneau de carrosserie situé de l'autre côté du joint d'étanchéité par rapport à la portion de bordure.

2. Un ruban adhésif protecteur destiné à masquer des joints d'étanchéité flexibles du type ayant une portion de bordure qui recouvre un panneau de carrosserie adjacent, ledit ruban adhésif protecteur (1) comportant le long de sa largeur totale (B), au moins sur le côté qui est laissé libre au cours de l'application (5), une structure de surface lisse légèrement texturée, et du côté opposé (6), une couche de bord adhésive sensible à la pression (7) et une portion de bord non adhésive destinée à être insérée sous la portion de bordure du joint d'étanchéité.

3. Un ruban adhésif protecteur selon la revendication 2, caractérisé en ce que la structure de surface lisse légèrement texturée du côté qui est laissé libre (5) est revêtue de silicone.

4. Un ruban adhésif protecteur selon les revendications 2 et 3, caractérisé en ce que le ruban adhésif protecteur (1) présente une épaisseur de 0,5 mm.

5. Un ruban adhésif protecteur selon les revendications 2 à 4, caractérisé en ce que le ruban adhésif protecteur se présente sous forme d'un rouleau.

6. Un ruban adhésif protecteur selon les revendications 2 à 4, caractérisé en ce que le ruban adhésif protecteur est de forme adaptée pour être appliqué au pare-brise spécifique d'un type de véhicule.

7. Un ruban adhésif protecteur selon la revendication 2, caractérisé en ce que la couche de bord adhésive sensible à la pression (7) est appliquée avec une couche de protection pelable.

8. Un ruban adhésif protecteur selon la revendication 2, caractérisé en ce que la couche adhésive de la couche de bord adhésive sensible à la pression (7) est thermorésistante.
